(19) Europäisches Patentamt
European Patent Office
Office européen des brevets

(11) **EP 3 350 111 B1**

(12) **EUROPÄISCHE PATENTSCHRIFT**

(45) Veröffentlichungstag und Bekanntmachung des Hinweises auf die Patenterteilung:
**28.04.2021 Patentblatt 2021/17**

(21) Anmeldenummer: **16766486.1**

(22) Anmeldetag: **16.09.2016**

(51) Int Cl.:
*B66C 13/28* (2006.01)        *E02F 9/22* (2006.01)
*B60L 1/00* (2006.01)         *B60L 7/22* (2006.01)
*B60L 50/30* (2019.01)

(86) Internationale Anmeldenummer:
**PCT/EP2016/001556**

(87) Internationale Veröffentlichungsnummer:
**WO 2017/045760 (23.03.2017 Gazette 2017/12)**

(54) **ELEKTRISCH ANGETRIEBENE ARBEITSMASCHINE MIT RÜCKLEISTUNGSSPEICHERUNG SOWIE VERFAHREN**

ELECTRICALLY DRIVEN WORKING MACHINE COMPRISING REVERSE POWER STORAGE AND METHOD

MACHINE DE TRAVAIL ÉLECTRIQUE À STOCKAGE DU RETOUR DE PUISSANCE ET PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.09.2015 DE 202015006587 U**
**07.12.2015 DE 202015008403 U**

(43) Veröffentlichungstag der Anmeldung:
**25.07.2018 Patentblatt 2018/30**

(73) Patentinhaber: **Liebherr-Components Biberach GmbH**
**88400 Biberach an der Riß (DE)**

(72) Erfinder:
• **MÜNST, Thomas**
**88444 Ummendorf (DE)**
• **BAYER, Daniel**
**89537 Giengen (DE)**

(74) Vertreter: **Thoma, Michael**
**Lorenz Seidler Gossel**
**Rechtsanwälte Patentanwälte**
**Partnerschaft mbB**
**Widenmayerstraße 23**
**80538 München (DE)**

(56) Entgegenhaltungen:
**WO-A2-2008/042319      DE-A1-102008 050 553**
**US-A1- 2015 063 968**

## Beschreibung

Die vorliegende Erfindung betrifft allgemein Arbeitsmaschinen mit einem Elektroantrieb und einem Energiespeichersystem zum Zwischenspeichern zurückgewonnener Energie. Die Erfindung betrifft dabei insbesondere statisch oder quasi-statisch arbeitende Arbeitsmaschinen mit einem primären Elektroantrieb und einem sekundären Hydraulikantrieb, die in zyklischen Bewegungen arbeiten, beispielsweise in Form eines Materialumschlaggeräts wie Bagger oder Krane, mit einem Elektroantrieb mit zumindest einem Elektromotor zum Antreiben eines Antriebsstrangs der Arbeitsmaschine, sowie einem Energiespeichersystem zum Zwischenspeichern von in einem Schlepp- und/oder Bremsbetrieb freiwerdender, vom Antriebsstrang auf den Elektromotor gegebener Rückleistung. Die Erfindung betrifft ferner auch ein Verfahren zum Betreiben einer Arbeitsmaschine mit einem Elektroantrieb, bei dem in einem Schlepp- bzw. Bremsbetrieb rückgewonnene Energie zur Kompensation der Systemverluste genutzt oder zwischengespeichert wird.

Bei in zyklischen Bewegungen arbeitende Materialumschlaggeräte wie Erdbewegungsbagger, Mining-Bagger, Raupenkrane, Hafenmobilkrane, Offshore-Krane, Schiffskrane oder Hydroseilbagger ist es lange üblich gewesen, einen verbrennungsmotorischen, insbesondere dieselmotorischen Primärantrieb zu verwenden, der einen oder mehrere Hydraulikwandler antreibt, mittels derer dann hydraulische Stellantriebe gespeist und hydraulisch angetrieben werden, um das Hauptarbeitsaggregat und/oder Nebenarbeitsaggregate der Maschine anzutreiben. Dies können beispielsweise bei einem Bagger Hydraulikzylinder zum Verstellen des Auslegerarms, Drehmotoren zum Drehen des Oberwagens oder auch ein Fahrantrieb sein. Bei Kranen können auf die genannte Weise Hubwinden, Laufkatzantriebe, Wippzylinder zum Verwippen des Auslegers, das Drehwerk zum Verdrehen der Drehbühne bzw. des verdrehbaren Kranteils oder Abspannwinden zum Verstellen der Abspannung angetrieben werden.

Tritt bei einer solchen Arbeitsmaschine mit dieselmotorischem Antrieb Rückleistung aus einem der Antriebsstränge auf, wird der Dieselmotor üblicherweise in seiner Drehzahl nach oben beschleunigt, wobei im Dieselmotor die rückgespeiste Energie in Wärme umgewandelt und verteilt bzw. abgegeben wird. Ein Dieselmotor ist diesbezüglich unempfindlich und kann systembedingt große Bremsmomente bereitstellen (Motorbremse), so dass weitere Einrichtungen zum Verteilen der Rückleistung in der Regel nicht benötigt werden.

Bei elektromotorisch angetriebenen Arbeitsmaschinen, deren Motor direkt vom elektrischen Versorgungsnetz gespeist wird, ist dies allerdings nicht der Fall. Hier kehrt sich dann, wenn Rückleistung aus einem der Antriebe anliegt, der Leistungsfluss um, d.h. der Elektromotor arbeitet als Generator und es wird Leistung in das Versorgungsnetz zurückgespeist. Hierbei müssen strenge Vorschriften erfüllt werden, da das Gerät wie ein Kraftwerk eingestuft wird, das elektrische Energie erzeugt. Bei direkt vom Netz versorgten Elektromotoren kommt dabei hinzu, dass sie üblicherweise nur bei konstanter Frequenz betrieben werden können, so dass ihre Drehzahl weitgehend festgelegt ist. Ein drehzahlvariabler Betrieb ist nicht möglich. Die von diesen Motoren rückgespeiste Energie ist in Frequenz und Phasenlage Netz asynchron und darf daher nicht in das öffentliche Netz zurückgespeist werden.

Aus der Schrift WO 2008/042319 A2 ist eine Planierraupe bekannt, deren Ketten von einem elektrischen Fahrantrieb antreibbar sind. Mit dem Elektromotor des Fahrantriebs ist ein Schwungrad verbunden, welches den Elektromotor weiter antreiben kann, wenn dessen Antriebsleitung nicht mehr benötigt wird, um den Elektromotor als Generator zu betreiben und den hierdurch produzierten Strom in eine Batterie einzuspeisen.

Um diese Problematik zu entschärfen und eine Entkopplung vom Versorgungsnetz zu erzielen, wurde bereits vorgeschlagen, bei elektromotorisch angetriebenen Arbeitsmaschinen der genannten Art einen Frequenzumrichter zu benutzen, mittels dessen die Drehzahl des elektromotorischen Antriebs geregelt werden kann. Dabei wird zumeist auch eine Bremseinrichtung vorgesehen, die einen elektronischen Leistungsschalter insbesondere in Form eines sog. Brems-Choppers sowie einen Leistungs- bzw. Bremswiderstand umfasst, in dem die Rückenergie in Wärme umgewandelt bzw. die Rückleistung abgebaut werden kann. Die rückgewonnene bzw. rückgespeiste Energie ist somit nicht mehr nutzbar. Oft wird dabei auch das Kühlsystem der Maschine stark belastet, so dass ein im Vergleich zum normalen Arbeitsbetrieb überdimensioniertes Kühlsystem benötigt wird, das die Maschine schwerer macht und Platzprobleme schafft.

Bei Hybridantrieben, die mit einem primären Elektroantrieb und einem sekundären Hydraulikantrieb arbeiten, wurde daher in jüngerer Zeit bereits vorgeschlagen, Energiespeicher zum Zwischenspeichern der rückgewonnenen Energie zu verwenden, wobei solche Energiespeichereinrichtungen als Hydraulikspeicher, die hydraulische Energie speichern, oder als elektrische Speicher zum Speichern von elektrischer Energie, die im primären Elektroantrieb erzeugt wird, ausgebildet sein können. Beispielsweise können Druckspeicher wie Blasen- oder Kolbenspeicher Verwendung finden, um hydraulische Energie zu speichern, oder Elektrospeicher wie Doppelschichtkondensatorspeicher oder Lithiumakkus oder andere elektrisch ladbare Speicher vorgesehen sein. Durch solche Energiespeichersysteme entstehen jedoch relativ komplexe zusätzliche Strukturen, die teuer sind und bei einer Gesamtbetrachtung des Systems dessen Wirtschaftlichkeit signifikant mindern.

Hiervon ausgehend liegt der vorliegenden Erfindung die Aufgabe zugrunde, eine verbesserte Arbeitsmaschine der genannten Art sowie ein verbessertes Verfahren der genannten Art zu schaffen, die Nachteile des Standes der Technik vermeiden und Letzteren in vorteilhafter Weise weiterbilden. Insbesondere soll ein wirtschaftliches Zwischenspeichern rückgewonnener Energie, die vom Antriebsstrang auf den Elektromotor gegeben wird, erreicht werden, das einen energieeffizienten Betrieb der Arbeitsmaschine ermöglicht und weniger Kühlleistung benötigt.

Erfindungsgemäß wird die genannte Aufgabe durch ein Verfahren gemäß Anspruch 1 sowie eine Arbeitsmaschine gemäß Anspruch 2 gelöst. Bevorzugte Ausgestaltungen der Erfindung sind Gegenstand der abhängigen Ansprüche.

Es wird also vorgeschlagen, vom Antriebsstrang auf den Elektromotor zurückgegebene Energie zumindest weitgehend nicht in elektrische Energie zu wandeln, sondern in Form kinematischer Energie zu speichern und hierzu den Elektromotor hinsichtlich seines elektromagnetischen Widerstands bzw. Dreh- oder Schleppmoments in einen Zustand zu steuern, in dem der Schleppwiderstand bzw. das elektromagnetische Moment des Motors weitgehend eliminiert bzw. zumindest signifikant reduziert ist gegenüber einem regulären Motor- bzw. Generatorbetrieb. Zum Zwischenspeichern rückgewonnener Energie arbeitet der Motor nicht als Generator, sondern als kinetischer Energiespeicher bzw. zumindest als Teil eines solchen kinetischen Energiespeichers. Erfindungsgemäß wird zumindest der Elektroantrieb zum Zwischenspeichern der rückgewonnenen Energie, die vom Antriebsstrang auf den Elektromotor gegeben wird, als Schwungradspeicher verwendet, wobei insbesondere ein elektromagnetisches Drehmoment des Elektromotors drehzahlabhängig gesteuert und in einem Speicherdrehzahlbereich oberhalb einer Nennbetriebsdrehzahl auf im Wesentlichen Null gehalten wird. Durch das Ausschalten bzw. signifikante Herabsetzen des elektromagnetischen Moments des Elektromotors erfolgt keine Rückspeisung in das Versorgungsnetz, sondern eine mechanische bzw. kinetische Energiespeicherung der rückgewonnenen Energie.

Hierdurch können viele Probleme und notwendige Maßnahmen bei der elektrischen Rückspeisung in das Versorgungsnetz vermieden werden, insbesondere brauchen keine teuren elektrischen Speicher wie Lithiumakkus oder Speicherkondensatoren verwendet werden. Das Kühlsystem der Arbeitsmaschine braucht nicht für den Rückspeisefall ausgelegt werden, sondern kann deutlich kleiner dimensioniert werden, da im Wesentlichen nur die im normalen Arbeitsbetrieb anfallende Wärme bewältigt werden muss. Gleichzeitig ist die kinetisch zwischengespeicherte Energie ohne komplexe Zusatzstrukturen wieder zum Antreiben der Arbeitsaggregate der Maschine verwendbar, ohne dass hierbei große Verluste anfallen würden. Die im Elektromotor auftretenden Reibungsverluste, wenn dieser als Schwungradspeicher arbeitet, sind verschwindend. Es kann mit einer sehr einfachen Antriebsstruktur ohne teure Zusatzkomponenten ein deutlich verringerter Energieverbrauch der Arbeitsmaschine erzielt werden.

Ein besonders einfacher Aufbau der Antriebsvorrichtung und auch des Energiespeichersystems kann dadurch erreicht werden, dass der Läufer des Elektromotors selbst den Schwungradspeicher bildet und keine zusätzlichen Schwungräder und Speicherkomponenten an den Elektromotor angekoppelt werden. In Weiterbildung der Erfindung kann der Elektromotor, insbesondere dessen Läufer, hinsichtlich seiner Rotationsträgheit und seiner zulässigen Maximaldrehzahl über die Nennbetriebsdrehzahl hinaus derart bemessen sein, dass die bei bestimmungsgemäßem Betrieb der Arbeitsmaschine auftretende maximale Rückleistung vollständig in Form kinetischer Energie in dem Schwungradspeicher gespeichert werden kann.

Wenn besonders hohe Mengen rückgewonnener Energie mit einem kleiner dimensionierten Elektromotor gespeichert werden sollen, kann gleichwohl eine zusätzliche Schwungradeinrichtung an den Elektromotor ankoppelbar sein, wobei für einen effizienten Betrieb zwischen einem solchen zusätzlichen Schwungradspeicher und dem Elektromotor eine Kupplung vorgesehen sein kann, die das An- und Abkuppeln der zusätzlichen Schwungradeinrichtung ermöglicht, beispielsweise das Abkuppeln im regulären Antriebsbetrieb und Ankuppeln in Rückspeise- bzw. Speicherbetrieb.

In der Regel können die bei gattungsgemäßen Arbeitsmaschinen anfallenden Rückspeiseleistungen jedoch vom Elektromotor bzw. dessen Läufer alleine in Form von kinetischer Energie zwischengespeichert werden, so dass der genannte Schwungradspeicher zum kinetischen Zwischenspeichern rückgespeister Energie alleine vom Elektromotor gebildet wird bzw. die Schwungradspeichereinrichtung vollständig in den Elektromotor integriert sein kann. Die zu speichernde Energie kann deutlich reduziert werden, indem im Bereich der Speicherdrehzahl ein großer Teil der systembedingten Verluste durch die Rückspeiseenergie kompensiert werden. Dies können die Schleppleistung der Hydraulikaggregate, die Antriebsleistung hydraulisch angetriebene Lüfter und/oder die Verlustleistung der Antriebsmotoren (Reibung/Lüfter) sein.

Das vorgenannte Herabsetzen des elektromagnetischen Moments des Elektromotors wird sowohl im Schlepp- und/oder Bremsbetriebsmodus als auch in einem Antriebsmodus vorgesehen. Die Motorsteuervorrichtung kann das elektromagnetische Moment des Elektromotors nicht nur beim Rückspeisen von Energie aus dem Antriebsstrang auf den Elektromotor im Wesentlichen auf Null halten, sondern auch dann auf im Wesentlichen Null halten, wenn im Antriebsstrang wieder Energie benötigt wird und diese vom als Schwungradspeicher fungierenden Elektromotor bereitgestellt werden kann, ohne dass hierfür der Elektromotor wieder elektrisch gespeist werden müsste.

Die Motorsteuervorrichtung wird das elektromagnetische Moment des Elektromotors auf im Wesentlichen Null halten, solange sich die Motordrehzahl in dem vorgenannten Speicherdrehzahlbereich oberhalb der Nenndrehzahl befindet. Sobald die Drehzahl die genannte Nennbetriebsdrehzahl im Schub- oder Schleppbetrieb übersteigt, schaltet die Motorsteuervorrichtung den elektromagnetischen Widerstand aus, so dass der Elektromotor nicht als Generator arbeitet, und hält diesen Zustand, bis die Drehzahl wieder absinkt und die genannte Nennbetriebsdrehzahl erreicht bzw. unterschreitet. Sobald die Nennbetriebsdrehzahl wieder unterschritten wird, schaltet die Motorsteuervorrichtung das elektromagnetische Drehmoment des Motors wieder zu, so dass der Elektromotor wieder als Elektromotor arbeitet und elektrische Leistung in mechanische Leistung umwandelt.

Der genannte Speicherdrehzahlbereich kann vorteilhafterweise nach oben hin begrenzt sein, um zu vermeiden, dass der Elektromotor eine maximal zulässige Drehzahl überschreitet oder der Antriebsstrang eine maximal zulässige Geschwindigkeit übersteigt. In vorteilhafter Weiterbildung der Erfindung kann die Motorsteuervorrichtung in einem Bremsdrehzahlbereich oberhalb des vorgenannten Speicherdrehzahlbereichs, insbesondere oberhalb einer maximal zulässigen Drehzahl das elektromagnetische Dreh- bzw. Schleppmoment des Motors auf ein vorbestimmtes Bremsmoment verstellen. Insbesondere kann der Elektromotor in dem besagten Bremsdrehzahlbereich als Generator arbeiten, wobei der Motorsteuervorrichtung vorteilhafterweise ein elektronischer Leistungsschalter insbesondere in Form eines Brems-Choppers und/oder ein Bremswiderstand zugeordnet sein kann, über den die im Bremsdrehzahlbereich vom Elektromotor erzeugte elektrische Energie abbaubar ist und/oder in dem die genannte, vom Elektromotor im Bremsdrehzahlbereich erzeugte elektrische Energie in Wärme wandelbar ist. Eine solche elektrische Bremseinrichtung dient im Wesentlichen jedoch lediglich als redundante, zusätzliche Sicherheitsbremse, die entsprechend klein dimensioniert sein kann. Der übliche Bremsbetrieb bzw. Schleppbetrieb, der im bestimmungsgemäßen Arbeitsbetrieb der Maschine auftritt, wird durch Verwendung des Elektromotors als Schwungradspeicher beherrscht und die hierbei rückgespeiste Energie, die vom Antriebsstrang her am Elektromotor ansteht, kinetisch zwischengespeichert.

Die Drehzahl, in Abhängigkeit derer die Motorsteuervorrichtung den Elektromotor hinsichtlich seines elektromagnetischen Dreh- und/oder Schleppmoments ansteuert, kann grundsätzlich in verschiedener Art und Weise bestimmt werden, beispielsweise anhand vorbestimmter Betriebsparameter abgeschätzt, berechnet oder kombinatorisch ermittelt werden. In Weiterbildung der Erfindung ist eine Drehzahlerfassungseinrichtung zum Erfassen der Drehzahl des Elektromotors und/oder des Antriebsstrangs und/oder eines damit verbundenen Arbeitsaggregats vorgesehen, wobei die Motorsteuervorrichtung in Abhängigkeit des Signals der genannten Drehzahlerfassungseinrichtung das elektromagnetische Moment des Elektromotors steuert. Beispielsweise kann ein Drehzahlsensor direkt die Drehzahl des Elektromotors selbst erfassen. Alternativ kann die Drehzahl des Elektromotors auch nur mittelbar bestimmt werden, beispielsweise indem die Drehzahl des mit dem Elektromotor ggf. über ein Getriebe gekoppelten Antriebsstrangs gemessen wird oder die Antriebsgeschwindigkeit eines an den Antriebsstrang angekoppelten Arbeitsaggregats erfasst wird.

In Weiterbildung der Erfindung kann die genannte Motorsteuervorrichtung einen Frequenzumrichter zum Ansteuern des Elektromotors und/oder zum Steuern des elektromagnetischen Dreh- und/oder Schleppmoments des Elektromotors aufweisen. Über den genannten Frequenzumrichter kann im Antriebsbetriebsmodus die Drehzahl des Elektromotors eingestellt werden. Alternativ oder zusätzlich kann über den genannten Frequenzumrichter das elektromagnetische Moment des Elektromotors im vorgenannten Speicherdrehzahlbereich abgesenkt oder auf im Wesentlichen Null gesetzt werden und/oder im vorgenannten Bremsdrehzahlbereich wieder heraufgesetzt werden. Grundsätzlich sind jedoch auch andere elektronische Bausteine verwendbar, mittels derer das elektromagnetische Moment des Elektromotors im genannten Speicherdrehzahlbereich gesenkt bzw. auf im Wesentlichen Null gesetzt werden kann.

Die Erfindung wird nachfolgend anhand eines bevorzugten Ausführungsbeispiels und zugehöriger Zeichnungen näher erläutert. In den Zeichnungen zeigen:

Fig. 1: eine schematische, perspektivische Darstellung einer Arbeitsmaschine in Form eines Materialumschlagbaggers, ihrer Bewegungsrichtungen von Drehung und Drehmoment und des in verschiedenen Betriebszuständen auftretenden Leistungsflusses zwischen einem Elektromotor und einem Antriebsstrang, wobei ergänzend zu den Darstellungen des Leistungsflusses die Drehzahl des Elektromotors und dessen elektromagnetisches Moment, das von der Motorsteuervorrichtung gesteuert wird, im Zeitverlauf dargestellt sind,

Fig. 2: ein Flussdiagramm zur Verdeutlichung der Arbeitsweise der Motorsteuervorrichtung, die das elektromagnetische Moment des Elektromotors drehzahlabhängig steuert, und

Fig. 3: ein Drehmoment-Drehzahl-Diagramm, das das in den verschiedenen Drehzahlbereichen vom Elektromotor bereitgestellte Drehmoment verdeutlicht.

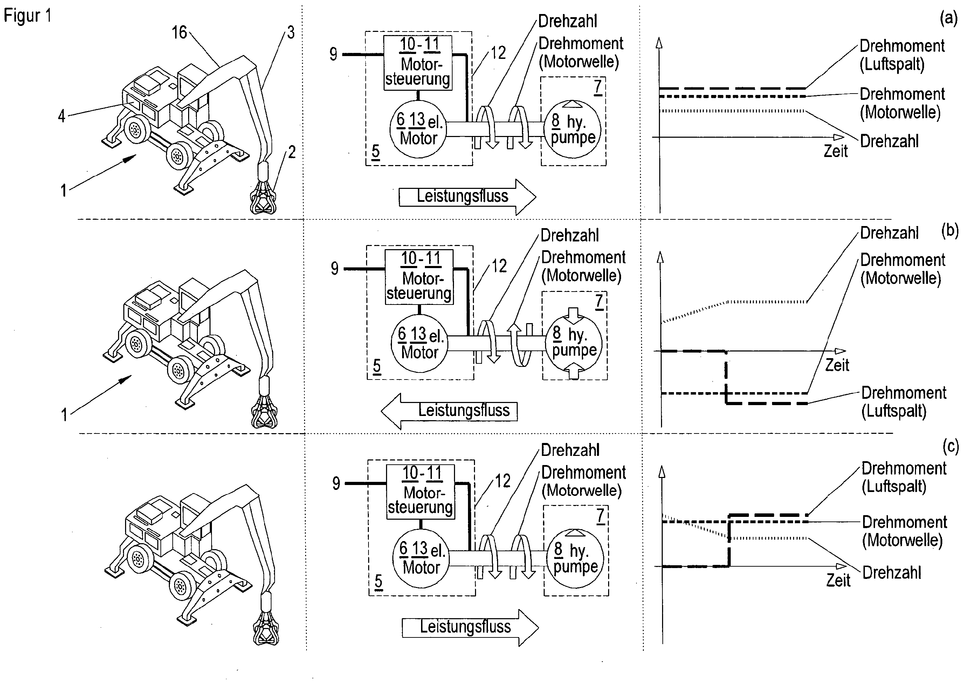

Wie Fig. 1 zeigt, kann die Arbeitsmaschine 1 insbesondere in Form eines in zyklischen Bewegungen arbeitenden, vorzugsweise stationären oder quasistationären Materialumschlaggeräts wie beispielsweise in Form eines Baggers oder eines Krans ausgebildet sein, wobei in der Zeichnung konkret ein Bagger dargestellt ist, dessen Hauptarbeitsaggregat ein Greifer 2 ist, der am Stiel eines Auslegers 3 angelenkt ist, wobei der genannte Greifer 2 durch diverse Hydraulikaktoren bewegt und verstellt werden kann. In an sich bekannter Weise können Greiferbacken des Greifers 2 zusammengefahren und der Greifer 2 durch hydraulische Stellaktoren gegenüber dem Stiel 3 verdreht und/oder verkippt und durch Bewegen des Stiel 3 selbst verfahren werden. Der Ausleger 16 ist an einem Oberwagen 4 angelenkt, der um eine aufrechte Achse mittels eines Drehwerks genüber dem Unterwagen der Arbeitsmaschine 1 verdreht werden kann.

Anstelle des dargestellten Materialumschlagbaggers kann die Arbeitsmaschine 1 jedoch auch in Form eines anderen Baggers wie beispielsweise eines Erdbewegungsbaggers, eines Mining-Baggers oder eines Hydroseilbaggers, aber auch in Form eines Krans wie beispielsweise in Form eines Raupenkrans, eines Hafenmobilkrans, eines Offshore-Krans oder eines Schiffskrans, oder auch in Form einer anderen Baumaschine oder Materialumschlagmaschine ausgebildet sein, die vorzugsweise in zyklischen Bewegungen arbeitet.

Wie Fig. 1 verdeutlicht, umfasst die Arbeitsmaschine 1 einen primären Elektroantrieb 5, der zumindest einen Elektromotor 6 aufweist und einen Antriebsstrang 7 antreibt, an dem ein sekundärer Antrieb insbesondere in Form eines Hydraulikantriebs angebunden sein kann. Beispielsweise kann ein Hydraulikwandler in Form einer Pumpe wie beispielsweise einer verstellbaren Schrägscheiben- bzw. Axialkolbenpumpe angebunden sein, wobei jedoch auch andere Wandler und Sekundärantriebseinheiten vorgesehen sein können. Der genannte Hydraulikwandler des Hydraulikantriebs 8 kann die vorgenannten Stellantriebe beispielsweise in Form von Hydraulikzylindern mit Hydraulikdruck versorgen, um die genannten Stellbewegungen der Arbeitsmaschine ausführen zu können.

Der Elektroantrieb 5 kann von einem nicht näher dargestellten Versorgungsnetz 9 mit elektrischem Strom bzw. Spannung versorgt werden, wobei das Versorgungsnetz 9 ein Festnetz sein kann, an das der Bagger über ein Kabel angeschlossen ist oder ein von einem Verbrennungsmotor angetriebener Generator oder ein ausreichend großer Akku bzw. Stromspeicher oder eine Kombination hiervon.

Der Elektromotor 6 wird von einer Motorsteuervorrichtung 10 angesteuert, wobei die genannte Motorsteuervorrichtung 10 zumindest einen Frequenzumrichter 11 aufweisen kann. Eine Drehzahlerfassungseinrichtung 12 beispielsweise in Form eines Drehzahlsensors erfasst die Drehzahl des Elektromotors 6 und/oder des Antriebsstrangs 7 und stellt der Motorsteuervorrichtung 10 ein entsprechendes Drehzahlsignal bereit, so dass die Motorsteuervorrichtung 10 den Elektromotor 6 drehzahlabhängig über den Frequenzumrichter 11 ansteuern kann.

Der Elektromotor 6 wird hierbei vorteilhafterweise nicht wie bisher mit konstanter Frequenz betrieben, sondern kann beschleunigt bis zu einer Nennbetriebsdrehzahl $n_{Nenn}$ bzw. bis zu einer maximal zulässigen Drehzahl $n_{Max}$ und bis zu einer minimalen Drehzahl $n_{Min}$, die größer Null sein kann, verzögert werden.

Der Elektromotor 6 umfasst dabei in an sich bekannter Weise einen nicht eigens dargestellten Läufer, der eine relativ große Trägheit besitzen kann, dessen kinetische Energie sich entsprechend folgender Formel für einen trägen, rotierenden Körper ergibt:

$$E = \tfrac{1}{2} \cdot J \cdot \omega^2$$

wobei E die kinetische Energie, J das Massenträgheitsmoment des Läufers und $\omega$ die Winkelgeschwindigkeit der Rotation des Läufers angibt. Wie an sich bekannt, ist eine Energie notwendig, um diesen Läufer zu beschleunigen, während umgekehrt Energie frei wird, wenn der Körper in seiner Rotation verzögert wird.

Hierdurch kann der Läufer des Elektromotors 6 als Schwungradspeicher verwendet werden. Es ist keine zusätzliche kinematische Speicherkomponente notwendig, gleichwohl kann eine solche jedoch vorgesehen und an den Elektromotor angekoppelt sein. Der Energiespeicher 13 zum Zwischenspeichern rückgewonnener Energie aus dem Antriebssystem kann durch den Elektromotor 6 bzw. dessen Läufer alleine gebildet sein.

Wie Fig. 1 (a) zeigt, kann im regulären, fremdenergiegespeisten, d.h. aus dem Versorgungsnetz 9 gespeisten Antriebsbetrieb der vom Elektromotor 6 auf den Antriebsstrang 7 gehende Leistungsfluss durch den Elektromotor 6 erzeugt werden, indem dieser ein positives Drehmoment und eine positive Drehzahl bereitstellt. Die aus dem Versorgungsnetz 9 eingespeiste elektrische Energie wird vom Elektromotor 6 in das genannte positive Drehmoment und die entsprechende Drehzahl gewandelt, wobei hier die Steuerung über den Frequenzumrichter 11 erfolgt. Dieser normale Antriebsfall trifft immer zu, wenn beschleunigende Bewegungen und/oder Arbeitsbewegungen, bei denen physikalische Arbeit verrichtet wird, ausgeführt werden. Der Elektromotor 6 kann hierbei mit konstanter Drehzahl arbeiten, die beispielsweise 1800 U/min betragen kann. Über den Antriebsstrang 7 wird der Hydraulikwandler des Hydraulikantriebs 8 entsprechend angetrieben und die Stellbewegung ausgeführt.

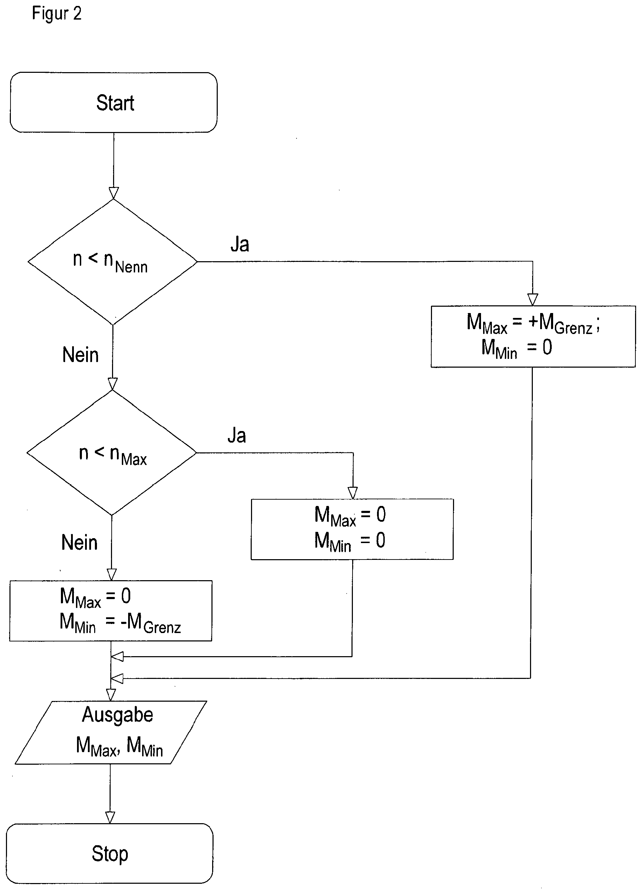

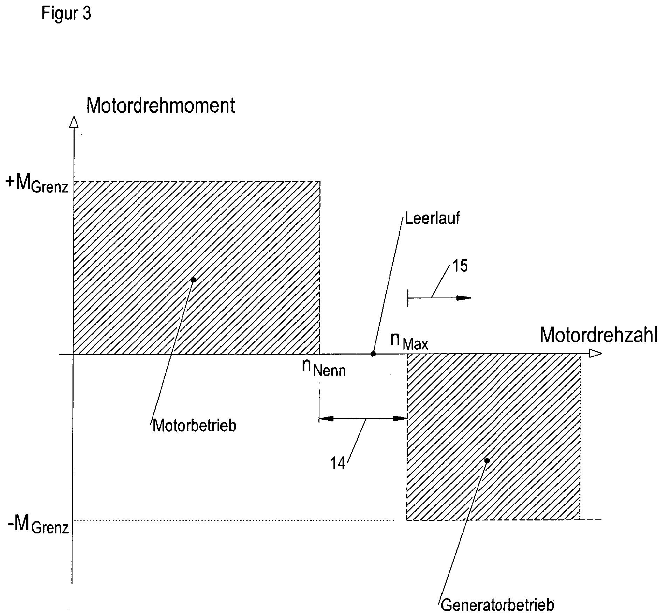

Im Falle von bremsenden und/oder schleppenden Bewegungen, z.B. wenn das Drehwerk den Oberwagen 4 abbremst oder der Ausleger 3 unter der Last am Greifer 2 abgesenkt wird, kehrt sich das Drehmoment am Antriebsstrang 7 und damit an der Motorwelle des Elektromotors 6 um und mechanische Leistung fließt aus dem Antriebsstrang 7 zurück in den Elektromotor 6, vgl. Teilansicht (b) der Fig. 1. In diesem Schlepp- und/oder Bremsbetrieb wird der Elektromotor 6 von der Motorsteuervorrichtung 10 derart angesteuert und/oder geregelt, dass das elektrische Drehmoment des Elektromotors 6 auf im Wesentlichen Null gesetzt wird, solange die Nenndrehzahl $n_{Nenn}$ überschritten, eine maximale Drehzahl $n_{Max}$ jedoch nicht überschritten wird. Wie aus Fig. 2 hervorgeht, wird die von der Drehzahlerfassungseinrichtung 12 bereitgestellte, tatsächliche Ist-Drehzahl mit einer vorbestimmten Nennbetriebsdrehzahl $n_{Nenn}$ und einer ebenfalls vorbestimmten maximal zulässigen Drehzahl $n_{Max}$ verglichen. Liegt die Ist-Drehzahl oberhalb der Nennbetriebsdrehzahl $n_{Nenn}$, jedoch unterhalb der maximal zulässigen Drehzahl $n_{Max}$, also in einem bestimmungsgemäßen Speicherdrehzahlbereich 14, der in der Fig. 3 als "Leerlauf" gekennzeichnet ist, wird der Elektromotor 6 ohne elektromagnetisches Moment gefahren, d.h. er arbeitet weder als Motor noch als Generator und kann sich im Wesentlichen nur unter Überwindung seines sehr geringen Reibmoments und seiner Trägheit drehen und beschleunigen.

Die zu speichernde Energie kann deutlich reduziert werden, indem im Bereich der Speicherdrehzahl ein großer Teil der systembedingten Verluste durch die Rückspeiseenergie kompensiert werden. Dies können die Schleppleistung der Hydraulikaggregate, die Antriebsleistung hydraulisch angetriebene Lüfter und/oder die Verlustleistung der Antriebsmotoren (Reibung/Lüfter) sein.

Dies bedeutet, dass der Läufer des Elektromotors 6 im zuvor genannten Brems- und/oder Schleppbetrieb aufgrund des negativen Drehmoments aus dem Antriebsstrang 7 beschleunigt wird und die in den Elektromotor 6 rückgeführte Energie aus dem Antriebsstrang 7 in kinetische Energie umgewandelt wird, die sich nun in der Rotation des Läufers des Elektromotors 6 befindet, d.h. als kinetische Energie des als Schwungradspeicher fungierenden Läufers gespeichert wird.

Die Trägheit des Elektromotors 6, insbesondere dessen Läufers, sowie das Drehzahlfenster zwischen der Nennbetriebsdrehzahl $n_{Nenn}$ und der maximal zulässigen Drehzahl $n_{Max}$ des Elektromotors 6 werden dabei vorteilhafterweise derart bemessen, dass die maximal mögliche Energie, die bei bestimmungsgemäßem Betrieb der Arbeitsmaschine 1 aus dessen Antriebsstrang 7 auf den Elektromotor 6 rückgespeist wird, von dem Elektromotor 5 aufgenommen und in Form kinetischer Energie gespeichert werden kann, ohne dass der Elektromotor 6 hierbei in Überdrehzahl gelangen bzw. die zulässige Maximaldrehzahl $n_{Max}$ überschreiten würde.

Dreht sich im Antriebsstrang 7 die Richtung des Drehmoments wieder, weil beispielsweise wieder eine beschleunigende Bewegung ausgeführt werden soll oder eine Last am Greifer 2 gehoben werden soll, wird zunächst die im Elektromotor 6 kinetisch gespeicherte Energie verwendet, um den Antriebsstrang 7 entsprechend anzutreiben. Bevor dem Elektromotor 6 wieder elektrische Leistung aus dem Versorgungsnetz 9 zugeführt wird, wird zunächst der Läufer des Elektromotors 6 wieder abgebremst, um die zwischengespeicherte kinetische Energie aus dem Schwungradspeicher zu verwenden. Insbesondere wird der Elektromotor 6 solange ohne Zuführen elektrischer Leistung betrieben, solange sich der Elektromotor 6 oberhalb seiner Nennbetriebsdrehzahl $n_{Nenn}$ befindet. Das elektromagnetische Moment des Elektromotors 6 wird von der Motorsteuervorrichtung 10 solange auf im Wesentlichen Null gehalten, solange sich der Motor 6 oberhalb der genannten Nennbetriebsdrehzahl $n_{Nenn}$ befindet, vgl. Fig. 1, Teilansicht (c).

Dauert die im Antriebsstrang 7 benötigte Leistung an, so dass der Elektromotor 6 bis hinunter zur genannten Nennbetriebsdrehzahl $n_{Nenn}$ verzögert wird, wird vorteilhafterweise ab diesem Zeitpunkt wieder aktiv angetrieben und aus dem Versorgungsnetz 9 elektrische Energie zugeführt. Die Motorsteuervorrichtung 10 steuert den Elektromotor 6 über den Frequenzumrichter 10 entsprechend an und setzt das elektromagnetische Moment wieder herauf, um die Antriebsleistung bereitstellen zu können. Der Elektromotor 6 erzeugt dann wieder ein positives Drehmoment und speist Energie in den Antriebsstrang 7 der Maschine, so wie dies an sich die Teildarstellung (c) der Fig. 1 zeigt.

Wie Fig. 1, dort die Teildarstellung (b) zeigt, kann die im Rückspeisebetrieb bei weggeschaltetem elektromagnetischem Moment des Elektromotors 6 ansteigende Drehzahl n durch die genannte Drehzahlerfassungseinrichtung 12 überwacht und von der Motorsteuervorrichtung 10 begrenzt werden. Insbesondere dann, wenn die maximal zulässige Drehzahl $n_{Max}$ erreicht wird, kann die Motorsteuervorrichtung 10 wieder ein elektromagnetisches Moment auf den Motor aufschalten, so dass dieser als Generator arbeitet und ein negatives Drehmoment bzw. Schleppmoment bereitstellt, vgl. Fig. 3, dort "Generatorbetrieb" sowie Fig. 1, Teilansicht (b), dort den zweiten Teil des Drehzahl- und Drehmomentverlaufs mit gleichbleibender Drehzahl und negativem Drehmoment. Das elektromagnetische Moment des Elektromotors 6 wird hierbei von der Motorsteuervorrichtung 10 vorteilhafterweise derart gesteuert, dass gerade so viel Brems- bzw. Schleppmoment bereitgestellt wird, um die Drehzahl nicht über die maximal zulässige Drehzahl $n_{Max}$ hinausschießen zu lassen und der Motor mit im Wesentlichen maximal zulässiger Drehzahl $n_{Max}$ dreht.

Die hierbei anfallende Generatorleistung des Elektromotors 6 kann vorteilhafterweise über einen elektronischen Leistungsschalter beispielsweise in Form eines Brems-Choppers und eines Leistungswiderstands bzw. Bremswiderstands, der der Motorsteuervorrichtung 10 zugeordnet ist, abgebaut und in Wärme umgewandelt werden. Diese elektrische Bremsvorrichtung braucht jedoch lediglich aus Sicherheitsgründen im Sinne einer redundanten Bremseinrichtung vorgesehen sein und kann entsprechend klein dimensioniert sein, da im bestimmungsgemäßen Betrieb an sich die Maximaldrehzahl nicht überschritten wird und die gesamte rückgespeiste Energie als kinetische Energie im drehenden Läufer zwischengespeichert wird.

Vorteilhafterweise ist die Motorsteuervorrichtung 10 derart ausgebildet, dass eine Rückleistung ins Versorgungsnetz 9 vollständig unterbunden ist. Insofern sind Vorschriften diesbezüglich unbeachtlich.

**Patentansprüche**

1. Verfahren zum Betreiben einer Arbeitsmaschine (1) wie beispielsweise Materialumschlaggerät, die einen Elektroantrieb (5) mit zumindest einem Elektromotor (6) zum Antreiben eines Antriebsstrangs (7) aufweist, wobei in einem Schlepp- und/oder Bremsbetrieb rückgewonnene, vom Antriebsstrang (7) auf den Elektromotor (6) gegebene Rückspeiseenergie zwischengespeichert wird, **dadurch gekennzeichnet, dass** der Elektromotor (6) zum Zwischenspeichern der Rückspeiseenergie als Schwungradspeicher verwendet wird, wobei ein elektromagnetisches Dreh- und/oder Schleppmoment des Elektromotors drehzahlabhängig gesteuert wird und in einem Speicherdrehzahlbereich (14) oberhalb einer Nennbetriebsdrehzahl ($n_{Nenn}$) sowohl in einem Schlepp- und/oder Bremsbetriebsmodus, in dem ein Leistungsfluss vom Antriebsstrang (7) auf den Elektromotor (6) vorhanden ist, als auch in einem Antriebsmodus, in dem ein Leistungsfluss von dem Elektromotor (6) auf den Antriebsstrang (7) vorhanden ist, von einer Motorsteuervorrichtung (10) auf im Wesentlichen Null gehalten wird.

2. Arbeitsmaschine, insbesondere in Form eines in zyklischen Bewegungen arbeitenden Materialumschlaggeräts wie Bagger oder Kran, mit einem Elektroantrieb (5) mit zumindest einem Elektromotor (6) zum Antreiben eines Antriebsstrangs (7) der Arbeitsmaschine, sowie einem Energiespeichersystem (13) zum Zwischenspeichern von in einem Schlepp- und/oder Bremsbetrieb rückgewonnener, vom Antriebsstrang (7) auf den Elektromotor (6) gegebener Rückspeiseenergie, wobei das Energiespeichersystem (13) einen mit dem Elektromotor (6) gekoppelten Schwungradspeicher aufweist, wobei eine Motorsteuervorrichtung (10) zum Steuern des elektromagnetischen Dreh- und/oder Schleppmoments des Elektromotors (6) in Abhängigkeit einer Motordrehzahl vorgesehen ist, **dadurch gekennzeichnet, dass** die Motorsteuervorrichtung (10 dazu ausgebildet ist, in einem Speicherdrehzahlbereich (14) oberhalb einer Nennbetriebsdrehzahl ($n_{Nenn}$) das elektromagnetische Dreh- und/oder Schleppmoment sowohl in einem Schlepp- und/oder Bremsbetriebsmodus, in dem ein Leistungsfluss vom Antriebsstrang (7) auf den Elektromotor (6) vorhanden ist, als auch in einem Antriebsmodus, in dem ein Leistungsfluss von dem Elektromotor (6) auf den Antriebsstrang (7) vorhanden ist, auf im Wesentlichen null zu halten.

3. Arbeitsmaschine nach dem vorhergehenden Anspruch, wobei der Elektroantrieb (5) mit einem Hydraulikantrieb (8) verbunden ist, der zumindest einen von dem Elektromotor (6) antreibbaren Hydraulikwandler aufweist.

4. Arbeitsmaschine nach einem der beiden vorhergehenden Ansprüche, wobei der Schwungradspeicher vom Läufer des Elektromotors (6) gebildet ist und/oder das Energiespeichersystem (13) vollständig in den Elektromotor (6) integriert ist.

5. Arbeitsmaschine nach einem der vorhergehenden Ansprüche, wobei der Elektromotor (6) hinsichtlich der rotatorischen Trägheit seines Läufers und hinsichtlich eines Drehzahlfensters zwischen der genannten Nennbetriebsdrehzahl ($n_{Nenn}$) und einer maximal zulässigen Drehzahl ($n_{Max}$) derart bemessen ist, dass die bei bestimmungsgemäßem Arbeitsbetrieb der Arbeitsmaschine (1) maximal auftretende Rückspeiseenergie vollständig als kinetische Energie in dem Elektromotor (6) zwischenspeicherbar ist.

6. Arbeitsmaschine nach einem der vorhergehenden Ansprüche, wobei der genannte Speicherdrehzahlbereich (14) nach oben durch eine maximal zulässige Drehzahl ($n_{Max}$) begrenzt ist und die Motorsteuervorrichtung (10) in einem Bremsdrehzahlbereich oberhalb des Speicherdrehzahlbereichs, insbesondere oberhalb der maximal zulässigen Drehzahl ($n_{Max}$), das elektromagnetische Dreh- und/oder Schleppmoment des Elektromotors (6) auf ein vorbestimmtes Bremsmoment einstellt.

7. Arbeitsmaschine nach dem vorhergehenden Anspruch, wobei der Motorsteuervorrichtung (10) ein elektronischer Bremsleistungsschalter, insbesondere Brems-Chopper, und/oder ein Bremswiderstand zugeordnet ist, über den die im Bremsdrehzahlbereich vom Elektromotor (6) erzeugte elektrische Energie abbaubar ist.

8. Arbeitsmaschine nach einem der vorhergehenden Ansprüche, wobei die Motorsteuervorrichtung (10) derart ausgebildet ist, dass ein Rückspeisen von elektrischer Energie in ein Versorgungsnetz, an das der Elektromotor (6) angebunden ist, verhindert ist.

9. Arbeitsmaschine nach einem der vorhergehenden Ansprüche, wobei eine Drehzahlerfassungseinrichtung (12) zum Erfassen der Drehzahl des Elektromotors (6) und/oder des Antriebsstrangs (7) und/oder eines mit dem Antriebsstrang (7) verbundenen Arbeitsaggregats vorgesehen ist und die Motorsteuervorrichtung (10) in Abhängigkeit eines Signals der Drehzahlerfassungseinrichtung (12) das elektromagnetische Dreh- und/oder Schleppmoment des Elektromotors (6) steuert.

**10.** Arbeitsmaschine nach einem der vorhergehenden Ansprüche, wobei die Motorsteuervorrichtung (10) einen Frequenzumrichter (11) zum Ansteuern des Elektromotors (6) und/oder Steuern des elektromagnetischen Dreh- und/oder Schleppmoments des Elektromotors (6) aufweist.

**Claims**

**1.** Method for operating a working machine (1), such as a material-transferring device, comprising an electric drive (5) with at least one electric motor (6) for driving a drive train (7), wherein recovered energy that is recovered in a towing and/or braking operation and transferred from the drive train (7) to the electric motor (6) is stored intermediately, **characterized in that** the electric motor (6) is used as a flywheel storage system for the intermediate storage of the recovered energy, wherein an electromagnetic torsional and/or drag torque of the electric motor is controlled as a function of motor speed and is kept at essentially zero by a motor control device (10) in a storage device speed range (14) above a nominal operating speed ($n_{Nenn}$), both in the towing and/or braking operation mode, in which there is a power flow from the drive train (7) to the electric motor (6), and in a drive mode, in which there is a power flow from the electric motor (6) to the power train (7).

**2.** Working machine, in particular in the form of a material-transferring device that functions in cyclical movements, such as an excavator or a crane, with an electric drive (5) having at least one electric motor (6) for driving a drive train (7) of the working machine and with an energy storage system (13) for the intermediate storage of recovered energy that is recovered in a towing and/or braking operation and transferred from the drive train (7) to the electric motor (6), wherein the energy storage system (13) has a flywheel storage system that is coupled with the electric motor (6), wherein a motor control device (10) is provided for controlling the electromagnetic torsional and/or drag torque of the electric motor (6) as a function of a motor speed, **characterized in that** the motor control device (10) is configured, in a storage device speed range (14) above a nominal operating speed ($n_{Nenn}$), to keep the electromagnetic torsional and/or drag torque at essentially zero both in a towing and/or braking operation mode, in which there is a power flow from the drive train (7) to the electric motor (6), and in a working mode, in which there is a power flow from the electric motor (6) to the power train (7).

**3.** Working machine according to the preceding claim, wherein the electric drive (5) is connected with a hydraulic drive (8), which comprises at least one hydraulic converter that can be driven by the electric motor (6).

**4.** Working machine according to one of the two preceding claims, wherein the flywheel storage system is formed by the rotor of the electric motor (6) and/or the energy storage system (13) is fully integrated into the electric motor (6).

**5.** Working machine according to one of the preceding claims, wherein the electric motor (6) is dimensioned with regard to the rotational inertia of its rotor and with regard to the rotational speed window between the nominal operating speed ($n_{Nenn}$) and a maximum allowable speed ($n_{Max}$) in such a way that the maximum recovered energy that occurs during intended working operation of the machine (1) can be stored intermediately entirely in the form of kinetic energy in the electric motor (6).

**6.** Working machine according to one of the preceding claims, wherein the aforementioned storage device speed range (14) is limited upwardly by a maximum allowable speed ($n_{Max}$), and the motor control device (10) sets the electromagnetic torsional and/or drag torque of the electric motor (6) to a predetermined braking torque in a braking speed range above the storage device speed range, in particular above the maximum allowable speed ($n_{Max}$).

**7.** Working machine according to the preceding claim, wherein the motor control device (10) is associated with an electronic braking power switch, in particular a braking chopper, and/or a braking resistor, by means of which the electrical energy generated by the electric motor (6) in the braking speed range can be dissipated.

**8.** Working machine according to one of the preceding claims, wherein the motor control device (10) is configured such that a recovery of electrical energy into a supply network to which the electric motor (6) is connected is prevented.

**9.** Working machine according to one of the preceding claims, wherein a speed detection device (12) is provided for the detection of the rotary speed of the electric motor (6) and/or of the drive train (7) and/or of a working unit connected to the drive train (7), and the motor control device (10) controls the electromagnetic torsional and/or drag torque of the electric motor (6) depending on a signal of the speed detection device (12).

**10.** Working machine according to one of the preceding claims, wherein the motor control device (10) comprises a frequency inverter (11) to actuate the electric motor (6) and/or to control the electromagnetic torsional and/or drag torque of electric motor (6).

## Revendications

1. Procédé de fonctionnement d'une machine de travail (1), telle qu'un engin de manutention de matériaux, qui comporte un entraînement électrique (5) avec au moins un moteur électrique (6) pour entraîner une chaîne cinématique (7), de l'énergie de récupération passée de la chaîne cinématique (7) au moteur électrique (6), récupérée dans un mode de traînage et/ou de freinage, est stockée temporairement, **caractérisé en ce que** le moteur électrique (6) est utilisé comme accumulateur d'énergie par volant d'inertie pour stocker temporairement l'énergie de récupération, un couple électromagnétique de rotation et/ou de traînée du moteur électrique étant commandé en fonction de la vitesse de rotation et, dans une plage de vitesse de rotation d'accumulateur (14) supérieure à une vitesse de rotation nominale de fonctionnement ($n_{nom}$), étant maintenu sensiblement à zéro par un dispositif de commande de moteur (10), aussi bien dans un mode de traînage et/ou de freinage, dans lequel un flux de puissance est présent de la chaîne cinématique (7) au moteur électrique (6), que dans un mode d'entraînement, dans lequel un flux de puissance est présent du moteur électrique (6) à la chaîne cinématique (7).

2. Machine de travail, en particulier sous la forme d'un engin de manutention de matériaux travaillant par mouvements cycliques, tel qu'une excavatrice ou une grue, comprenant un entraînement électrique (5) avec au moins un moteur électrique (6) pour entraîner une chaîne cinématique (7) de la machine de travail, ainsi qu'un système de stockage d'énergie (13) pour le stockage temporaire d'énergie de récupération passée de la chaîne cinématique (7) au moteur électrique (6), récupérée dans un mode de traînage et/ou de freinage, le système de stockage d'énergie (13) comportant un accumulateur par volant d'inertie couplé au moteur électrique (6), un dispositif de commande de moteur (10) pour commander le couple électromagnétique de rotation et/ou de traînée du moteur électrique (6) en fonction d'une vitesse de rotation du moteur étant prévu, **caractérisée en ce que** le dispositif de commande de moteur (10) est conçu pour, dans une plage de vitesse de rotation d'accumulateur (14) supérieure à une vitesse de rotation nominale de fonctionnement ($n_{nom}$), maintenir sensiblement à zéro le couple électromagnétique de rotation et/ou de traînée, aussi bien dans un mode de traînage et/ou de freinage, dans lequel un flux de puissance est présent de la chaîne cinématique (7) au moteur électrique (6), que dans un mode d'entraînement, dans lequel un flux de puissance est présent du moteur électrique (6) à la chaîne cinématique (7).

3. Machine de travail selon la revendication précédente, dans laquelle l'entraînement électrique (5) est relié à un entraînement hydraulique (8), qui comporte au moins un convertisseur hydraulique qui peut être entraîné par le moteur électrique (6).

4. Machine de travail selon l'une des deux revendications précédentes, dans laquelle l'accumulateur par volant d'inertie est formé par le rotor du moteur électrique (6) et/ou le système de stockage d'énergie (13) est entièrement intégré dans le moteur électrique (6).

5. Machine de travail selon l'une des revendications précédentes, dans laquelle le moteur électrique (6) est dimensionné, en ce qui concerne l'inertie de rotation de son rotor et en ce qui concerne une plage de vitesse de rotation comprise entre ladite vitesse de rotation nominale de fonctionnement ($n_{nom}$) et une vitesse de rotation maximale admissible ($n_{max}$), de telle manière que l'énergie de récupération maximale apparaissant en mode travail conforme à l'usage prévu de la machine de travail (1) peut être entièrement stockée temporairement comme énergie cinétique dans le moteur électrique (6).

6. Machine de travail selon l'une des revendications précédentes, dans laquelle ladite plage de vitesse de rotation d'accumulateur (14) est limitée vers le haut par une vitesse de rotation maximale admissible ($n_{max}$) et le dispositif de commande de moteur (10) règle, dans une plage de vitesse de rotation de freinage supérieure à la plage de vitesse de rotation d'accumulateur, en particulier supérieure à la vitesse de rotation maximale admissible ($n_{max}$), le couple électromagnétique de rotation et/ou de traînée du moteur électrique (6) sur un couple de freinage prédéfini.

7. Machine de travail selon la revendication précédente, dans laquelle un interrupteur électronique de puissance de freinage, en particulier un chopper de freinage, et/ou une résistance de freinage est associé(e) au dispositif de commande de moteur (10), par le biais duquel/de laquelle l'énergie électrique générée par le moteur électrique (6) dans la plage de vitesse de rotation de freinage peut être éliminée.

8. Machine de travail selon l'une des revendications précédentes, dans laquelle le dispositif de commande de moteur (10) est conçu de telle manière qu'une réinjection d'énergie électrique dans un réseau d'alimentation, auquel le moteur électrique (6) est raccordé, est empêchée.

9. Machine de travail selon l'une des revendications précédentes, dans laquelle un dispositif de détection de vitesse de rotation (12) pour détecter la vitesse de rotation du moteur électrique (6) et/ou de la chaîne cinématique (7) et/ou d'un organe de travail relié à la chaîne cinématique (7) est prévu et le dispositif de commande de moteur (10) commande le couple électromagnétique de rotation et/ou de traînée du moteur électrique (6) en fonction d'un signal du dispositif de détection de vitesse de rotation (12).

10. Machine de travail selon l'une des revendications précédentes, dans laquelle le dispositif de commande de moteur (10) comporte un convertisseur de fréquence (11) pour commander le moteur électrique (6) et/ou commander le couple électromagnétique de rotation et/ou de traînée du moteur électrique (6).

Figur 1

(a)

16

3

4

2

1

9 ─ 10 - 11 Motor-steuerung

12

Drehzahl
Drehmoment
(Motorwelle)

6 13 el. Motor

5

7

8 hy. pumpe

Leistungsfluss

Drehmoment (Luftspalt)
Drehmoment (Motorwelle)
Drehzahl
Zeit

(b)

9 ─ 10 - 11 Motor-steuerung

12

Drehzahl
Drehmoment
(Motorwelle)

6 13 el. Motor

5

7

8 hy. pumpe

Leistungsfluss

Drehzahl
Drehmoment (Motorwelle)
Zeit
Drehmoment (Luftspalt)

1

(c)

9 ─ 10 - 11 Motor-steuerung

12

Drehzahl
Drehmoment
(Motorwelle)

6 13 el. Motor

5

7

8 hy. pumpe

Leistungsfluss

Drehmoment (Luftspalt)
Drehmoment (Motorwelle)
Drehzahl
Zeit

EP 3 350 111 B1

Figur 2

```
                    ┌─────────────────┐
                    │      Start       │
                    └─────────────────┘
                             │
                             ▽
                          ╱     ╲
                       ╱           ╲          Ja
                      ╱  n < n_Nenn  ╲ ──────────────────────────┐
                       ╲           ╱                             │
                          ╲     ╱                                ▽
                         Nein │                        ┌───────────────────────┐
                             ▽                          │ M_Max = +M_Grenz ;    │
                          ╱     ╲                        │ M_Min  = 0            │
                       ╱           ╲         Ja          └───────────────────────┘
                      ╱  n < n_Max   ╲ ──────────┐                │
                       ╲           ╱             ▽                │
                          ╲     ╱        ┌──────────────┐         │
                         Nein │          │ M_Max = 0    │         │
                             ▽           │ M_Min  = 0   │         │
                    ┌──────────────┐     └──────────────┘         │
                    │ M_Max = 0    │           │                  │
                    │ M_Min = -M_Grenz         │                  │
                    └──────────────┘           │                  │
                             │◁────────────────┘                  │
                             │◁─────────────────────────────────┘
                             ▽
                      ╱ Ausgabe    ╱
                     ╱ M_Max, M_Min╱
                             │
                             ▽
                    ┌─────────────────┐
                    │      Stop        │
                    └─────────────────┘
```

Figur 3

Motordrehmoment

$+M_{Grenz}$

Leerlauf

15

$n_{Max}$

Motordrehzahl

$n_{Nenn}$

Motorbetrieb

14

$-M_{Grenz}$

Generatorbetrieb

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008042319 A2